Europäisches Patentamt

European Patent Office

Office européen des brevets

(11) Publication number: **0 027 745**
**B1**

(12) **EUROPEAN PATENT SPECIFICATION**

(45) Date of publication of patent specification: **29.08.84**

(21) Application number: **80303769.6**

(22) Date of filing: **23.10.80**

(51) Int. Cl.³: **C 25 B 3/00,** C 02 F 1/46

(54) **A process for the electrochemical degradation of persistent organic compounds, with harmful or potentially harmful properties.**

(30) Priority: **23.10.79 GB 7936764**

(43) Date of publication of application:
**29.04.81 Bulletin 81/17**

(45) Publication of the grant of the patent:
**29.08.84 Bulletin 84/35**

(84) Designated Contracting States:
**CH DE FR GB IT LI NL**

(56) References cited:
**EP-A-0 010 562**
**DD-A- 73 479**
**DE-A-2 131 880**
**US-A-4 161 435**

(73) Proprietor: **CRECONSULT LIMITED**
**140, Buckingham Palace Road**
**London SW1W 9SQ (GB)**

(72) Inventor: **Harrison, John Michael Organic
Chemistry Section
Chemical Defence Establishment Porton Downs
Salisbury Wiltshire SP4 0JQ (GB)**
Inventor: **Wilkinson, Rodney Gordon Organic
Chemistry Section
Chemical Defence Establishment Porton Downs
Salisbury Wiltshire SP4 0JQ (GB)**

(74) Representative: **Laredo, Jack Joseph et al
Elkington and Fife High Holborn House 52/54
High Holborn
London, WC1V 6SH (GB)**

(56) References cited:
**Ullmans Encyklopädie der technischen
Chemie, fourth Edition, vol. 3, page 302, Verlag
Chemie, Weinheim/Bergstr. (1973)
Methoden der organischen Chemie (Houben-
Weyl), vol. IV/1b Oxidation Teil 2, pages 1013
and 1014, Georg Thieme Verlag Stuttgart
(1975)**

**The file contains technical information
submitted after the application was filed and
not included in this specification**

## Description

The present invention relates to a process for the electrochemical degradation of persistent organic substances, with deleterious properties.

It is now a matter of common concern that various classes of organic chemical substances, which have been developed for certain valuable applications, have been found to be injurious, or potentially injurious, to mankind and other forms of life. Examples include insecticides, pesticides, herbicides and fungicides, used, for example, in agriculture and horiticulture, and also compounds and formulations in toiletry preparations for human use. Some organic chemical compounds of the above kind have been found to persist in the environment. Thus, these compounds are not, or else are only partially, degraded into simpler substances by natural processes such as photolysis and microbiological actions which processes, in other instances, bring about the degradation of relatively complex molecules into simple, non-toxic residues.

Many of the most persistent injurious, or potentially injurious, organic substances, which are of concern, are halogenated organic compounds. Of such substances, manufactured on a large scale and widely used, those which are halogenated with chlorine are the most common, with fluorinated compounds being the next most common. This order of use no doubt reflects the relative abundance of the halogens and the cost of their recovery on an industrial scale.

In the manufacture of halogenated organic compounds, it is generally the case that the chemical syntheses thereof proceed by way of a sequence of chemical reactions in each of which the yield of the desired product or intermediate product may be significantly lower than the theoretical yield because of a variety of factors, e.g. the limiting effects of equilibrium conditions in a reversible process, or the formation of alternative co-products of the reaction system. Such factors are, of course, well-known features of organic syntheses. Hence, at some stage in the manufacturing process, it is usually necessary to isolate the desired main product from a mixture of reaction products, by known methods such as distillation, solvent extraction and fractional crystallisation. This isolation of the desired product gives rise to the accumulation of quantities of unwanted residual substances, which then have to be disposed of.

Moreover, the highly toxic and stable compound 2,3,7,8-tetrachlorodibenzo-p-dioxin (TCDD) has been found to occur as an undesired by-product in the manufacture of 2,4,5-trichlorophenol, and thus may accumulate in still residues from the purification of the main product.

In other cases, such as the polychlorinated biphenyls (PCBs) the main products of the manufacturing process are themselves toxic, persistent compounds.

The most widely used method for the disposal of unwanted organic residues is the burning thereof in an incinerator. Organic substances are generally molecules based on straight or branched carbon chains, or on ring structures, which may be linked together in various ways. It has, therefore, hitherto been considered that combustion in the presence of atmospheric oxygen brings about the destruction of these molecules. Thus, it has been postulated that the carbon present in the molecule is oxidised to carbon dioxide, the hydrogen is oxidised to water vapour, and the other atoms, if present, enter into various combinations to form simple inorganic substances of a relatively innocuous nature, particularly after adequate dilution by dispersion in the atmosphere following discharge from a chimney, with or without pre-treatment in scrubbers, filters or other gas-cleaning devices.

In the case of many industrial residues, these assumptions may well be valid, e.g., when the residues are known to be free from halogenated compounds. However, evidence has now accumulated that complete destruction of all organic compounds may not be achieved in the kind of incinerators commonly used for this purpose. For example, it has been reported that an estimated 400,000 kilograms of PCBs were released into the atmosphere in the U.S. in 1970 from waste disposal burners (Nisbet, I.C.T. and Sarofim, A. F. -Environ.Hlth. Perspect 1972, 1, 21—28). The lack of total destruction may be attributed to various factors such as an insufficient residence time, the non-uniformity of gasflow distribution, the non-uniformity of oxygen distribution or availability, an insufficiently high temperature, the thermal stability of the compounds present and the equilibria which occur with pyrolysis products such as free radicals. In addition, commercially-operated waste incineration units are not normally reserved for specific known materials, but usually deal with virtually undefined waste product mixtures, with the result that it is unlikely that operating conditions can be optimised. Furthermore, limitations on temperature and on the other operating conditions are dictated by the design of the incinerator itself.

A further disadvantage of incineration is the possibility that, under the influence of the temperature sequence prevailing in the passage through the preheat, combustion and cooling stages, some substances may undergo transformations into new and stable compounds which are not totally destructible at the maximum temperatures and residence times provided by the furnace of the incinerator. For example, it has been reported (Chem. and Eng. News. Nov. 20, 1978, page 7) that traces of chlorinated dioxins, including the highly toxic compound: 2,3,7,8-tetrachlorodibenzo-p-dioxin (TCDD), have been found in particulate emissions from various combustion processes including incinerators, and this has been attributed to the action of heat at elevated temperatures on simpler substances such as chlorinated phenol derivatives, which are present in the materials being incinerated.

Thus, there is a real possibility that incineration, which is used to destroy organic waste products, may actually add to the existing environmental contamination by persistent toxic compounds.

When considering alternative conventional means for the destruction of persistent organic compounds, the practical possibilities are very limited. Let us consider, for example, the aforementioned highly toxic substance TCDD. It has been reported (Crosby, D. G.; Wong, A. S.; Plummer, J. R.; Woolson, E. A. — Science (1971), Vol 173, Page 748) that the decomposition thereof may be effected by photolysis in a suitable solvent. However, it is difficult to make practical use of this particular process in waste disposal on an industrial scale since TCDD occurs only as a trace impurity in other residues such as chlorinated phenols and derivatives thereof. Hence, the total size of the apparatus, the quantities and variety of solvents used and the means for their recovery for re-use, and the employment of considerable quantities of ultraviolet energy, all make for a costly and highly sophisticated installation, which is not without its own hazards.

Another method for the destruction of TCDD and other persistent chlorinated substances has been reported by D. P. C. Ayres in a paper entitled: "The oxidative control of pollutants" given at the meeting of the Royal Institute of Chemistry/Chemical Society (Industrial Division) on the 26th—28th September, 1979, under the heading "Inorganic and Organic pollutants in the troposphere and natural waters". In this method, the extremely powerful oxidising agent ruthenium tetroxide is used. It was reported that, in carbon tetrachloride solution, this agent led to an increase in the rate of oxidation with temperature to give a half-life for the TCDD of below 15 minutes at 77°C. Other acceptable solvents, having a low nucleophilic reactivity, such as chloroform and nitromethane, were also mentioned. It was also reported that the ruthenium tetroxide oxidising agent could be regenerated in a two-phase system by the use of a simple oxidant such as sodium hypochlorite. However, ruthenium tetroxide is itself toxic, and is expensive because of its limited availability. The use of ruthenium tetroxide is also complicated by the fact that the oxide has an appreciable vapour pressure. This fact and the choice of solvents needed lead to a process requiring a complicated and expensive installation with its own attendant operating risks.

Attempts have hitherto been made to use electrolysis in order to break down persistent toxic organic compounds. The decomposition of organic compounds by electrolysis is already well known from the literature, in particular from:

Ullman Encyklopädie der technischen Chemie, fourth Edition, vol. 3, page 302, paragraph 2.6.3, Verlag Chemie, Weinhein/Bergstr. (1973); Methoden der organischen Chemie (Houben-Weyl), vol. IV/1b Oxidation Teil 2, pages 1013 and 1014, Georg Thieme Verlag Stuttgart (1975); US—A— 4 161 435 (see, e.g., claims 1 and 13, column 2, lines 60—64, column 4, lines 60—62, column 5, lines 17, 18, column 10, lines 34—68, column 11, lines 1—5; Examples 1—6 and column 14, lines 19, 20); DE—A—2 131 880 (see, e.g., claims 1 and 3 and page 1, paragraph 2); DD—A—73 479 (see, e.g., claim 1, page 3, paragraphs 3 and 4, and page 4, paragraphs 1 and 2); and EP—A/— 0 010 562 (see, e.g., claim 1; page 1, lines 27—31, and page 2, lines 2—7).

The Ullmann Encyclopaedia describes generally the electrochemical treatment of waste waters, e.g. resulting from metal processing, electroplating and dye and drug preparation, to remove toxic substances which cannot be decomposed biologically, before discharge with or without additional treatment. Such toxic substances include, e.g., toxic metal cations, such as those of copper, lead and arsenic, toxic anions, such as the cyanide and chromate ions, and various organic substances including phenols. Cathodic reduction, anodic oxidation and electrodialysis are referred to. Ullmann concludes that direct electrolysis of waste water is not an economic solution. Houben-Weyl is essentially concerned with preparing organic compounds by the electrochemical oxidation of organic compounds, e.g. quinoline derivatives from quinoline itself, mono-halogenated quinolines and quinoxaline.

The only reference in Ullmann and Houben-Weyl, respectively, to the control of the electrolysis is the teaching in Ullmann of chloride addition to achieve the anodic evolution of chlorine which can then react chemically (as chlorine or as hypochlorite) with the cyanide ions or the organic materials such as the dyes drug residues or phenols. Houben-Weyl teaches the use of 75 to 80% sulfuric acid to dissolve the quinoline or quinoline derivatives in the presence of a small amount of vanadium oxide and of 5% caustic soda together with potassium permanganate (5%) in the case of the quinoxaline. Quinoline is well known to be oxidisable by alkaline permanganate, boiling concentrated sulphuric acid in the presence of selenium dioxide or ozone to produce the same products as by such electrochemical method (see in particular Kirk-Othmer Encyclopaedia, 2nd Edition, volume 16, page 867). There is therefore no real advantage in such teaching. Furthermore, in neither case, is there any teaching of a process which would be applicable to difficultly decomposable species such as dioxins, chlorinated dioxins, polychlorinated biphenyls, diquat and paraquat which are known to have a very low solubility in water.

US Patent No. 4 161 435 (Karl Moeglich) attempts to reduce by electrochemical means the level of "contaminants" (including materials which are not undesirable per se) in aqueous electrolytes. This process is used with a very wide variety of materials including polychlorinated biphenols. These are to be distinguished from the polychlorinated biphenyls of the present invention in having a much higher chemical activity and therefore do not represent the same problems of inertness and low water solubility. US Patent 4 161 435 is mainly concerned with a so-called novel type of "extended elec-

4

trode" which requires a highly turbulent suspension of particles, preferably in the form of graphite flakes, charge transfer being apparently achieved by electrostatic induction instead of by direct electrical contact. It is suggested that the process works by dissociation of water into hydrogen ions, hydroxyl ions, ozone and hydrogen peroxide which then oxidise or reduce the "contaminants" present. The U.S. Patent does not teach any oxidative/reductive degradation of contaminants which cannot be treated by other known electrochemical, chemical or physical methods but is merely concerned with an improvement of known electrochemical processes. There is no teaching of the mechanism of the present invention and, specifically, no teaching of the electrochemical break down of substances with low solubilities in water which are highly resistant to break down by chemical or electrochemical means such as the dioxins and the polychlorinated biphenyls.

DOS 2131880 (Fichtel & Sachs AG) is concerned with purifying water by a combined anodic oxidation and yeastification. The apparatus used employs a diaphragm to keep the products of oxidation and/or reduction under the influence of the anode or cathode, respectively, so as to prevent reverse reduction or oxidation at the cathode or anode, respectively. Gaseous oxygen is produced at the anode which suggests a cell voltage large enough to produce an oxygen overvoltage at the anode. The oxygen (albeit nascent oxygen) reacts with the impurities in conventional manner. This again is an entirely different mechanism from that of the invention and there is no teaching whatsoever of a means for the electrochemical breakdown of materials which have very low solubility in water and a high resistance to such breakdown by chemical or electrochemical means.

DD—A—73479 (Erich Heinrichson and Hans Gliwa) relates to reducing the toxicity of waste water obtained from the production of nitroaromatics. The nitroaromatic substances are broken down into less toxic, biological decomposable products, e.g., azo and azoxy compounds, quinones and the like, by

a) a first step involving a complete cathodic reduction, in acid solution, to the corresponding aromatic amine compounds; and

b) a second step under alkaline conditions involving a partial reoxidation to the intermediate azo or azoxy compounds using sodium hypochlorite generated by anodic oxidation.

Since this second stage (b) can also be carried out in conventional chemical manner, e.g., by oxidation of amino compounds using potassium permanganate or similar oxidising agents to form azo compounds, the process has little relevance to the problem facing the present applicants, namely, the treatment of difficultly decomposable compounds which are very sparingly soluble in aqueous systems.

EPA 0010562 in the name of Sorapec bears some similarlity with the US Patent in the name of Karl Moeglich discussed above. Thus, both describe a method involving suspending particles in a reaction zone between the electrodes of an electrolytic cell. In the case of the European application (by Sorapec), this is described as a so-called "dispersed electrode" and an advantage claimed is the ability to dispense with a diaphragm separating the anode and cathode compartments. In principle, the teaching of Sorapec in its broadest aspects is merely of an electrochemical transformation in which the products are soluble and no diaphragm is used between the anode and the cathode. A particular aspect of this process is the use of a so-called dispersed electrode whose polarity is determined by the relative kinetics of the reactions occurring at the surface of each electrode. This is an entirely different mechanism from that of the present invention. Furthermore, its object is clearly to be distinguished from the problem with which the applicants were specifically concerned, namely, the treatment of difficultly decomposable chemical compounds which are only very sparingly soluble in water.

It has been reported that it is possible to bring about the electrochemical decomposition of complex organic molecules by the use of organic electrolytes. For example, Cauquis and Maurey-Mey (Bulletin de la Société Chimique de France (1972) No. 9, pages 3588—3593) found that the substance diphenylene dioxide (dibenzo-p-dioxin) undergoes a reversible oxidation with the formation of a cation radical when dissolved in dry acetonitrile containing a small amount of lithium perchlorate, and when subjected to a voltaic field of 1.2 volts EMF (referred to a silver/silver ion electrode), using platinum electrodes. However, if water is added to the electrolyte, the process becomes incompletely reversible, and a fraction of the cation radical undergoes further transformation to a more readily oxidisable form, so that it is progressively decomposed.

Schroth, Borsdorf, Herzschuh and Seidler (Z. Chem., 10 Jg (1970), Heft 4, pages 147—148, 3rd February, 1970) have reported on the formation of dication radicals as intermediate states, when solutions of various dioxins and dithionins are subjected to voltammetric oxidation in water-free acetonitrile containing 0.1 M tetraethylammonium perchlorate, with the voltage rising to 2 volts (against a saturated calomel electrode), using rotating platinum electrodes. Furthermore, the role of the dication radicals in the formation of new complexes, e.g. with antimony pentachloride, and as intermediates in the substitution of additional groups, e.g. acetoxy and methoxy groups in the parent compound, was demonstrated.

Fenn, Krantz and Stuart (J. Electrochem. Soc. 1976, 123(11), 1643——47) have described the anodic oxidation of two polychlorinated biphenyls (PCB) namely, 4,4'-dichlorobiphenyl and 2,5,2',5'-tetrachlorobiphenyl. This work was directed towards the formation of the hydroxychlorobiphenyl derivatives which had been identified as metabolites of PCBs, and could not conveniently be obtained in good yield by conventional organic synthesis. Acetonitrile was the principal solvent, with tetraethylammonium fluoborate as a supporting electrolyte, and with the addition of silver perchlorate ($AgClO_4$) and 2—5 per cent water. Electrolysis was performed in a single-pass, flow-through cell so as to optimise the yield of the desired hydroxychlorobiphenyls. As in the process of Schroth et al (loc. cit.) and also that of Cauquis et al. (loc. cit.), discussed above, the Fenn process relies on acetonitrile as the electrolysis medium. The latter itself represents a hazard for the operatives of any industrial process and generally from the environmental viewpoint. It will be apparent that the work of Schroth, Cauquis, Fenn and their co-workers all of whom use acetonitrile as an electrolyte medium, whilst of scientific interest, does not represent a practical process for the decontamination and disposal of toxic, persistent compounds such as the chlorodioxins and polychlorinated diphenyls on an industrial scale.

We have now found that an electrochemical process can be used for the safe destruction of certain injurious, or potentially injurious organic substances, which are generally regarded as stable and resistant to normal natural and other chemical methods of decomposition, by subjecting said substances to anodic oxidation or cathodic reduction in an aqueous medium, to form an unstable cationic radical, and converting said radical in said medium to a compound with a lower oxidation potential or reduction potential than that of said organic substance, in the case of anodic oxidation or cathodic reduction, respectively.

The present invention provides a process for the electrochemical decomposition of at least one persistent toxic organic compound selected from dioxins, chlorinated dioxins, polychlorinated biphenyls, paraquat and diquat, which is difficultly decomposable and has a low solubility in water, characterised in that said compound is subjected to anodic oxidation or cathodic reduction in an electrolyte system comprising at least one alcohol in which said organic compound is at least partially soluble and water, to form at least one unstable cationic radical which reacts with said alcohol-water system, to form a product having a lower oxidation potential in the case of anodic oxidation or a lower reduction potential in the case of cathodic reduction than that of said compound.

The aqueous liquid medium may optionally include a supporting electrolyte where needed. Furthermore, a mixture of substances all or only one or more of which may be persistent, harmful or potentially harmful substances, may be electrochemically degraded by the process of the invention, simultaneously, or where appropriate in any desired sequence. It is only necessary that the anodic oxidation potential or cathodic reduction potential should be within the range employed to bring about the degradation of any specific substance.

In general if the intermediate product of either anodic oxidation or cathodic reduction is a comparatively stable radical, the liquid system advantageously includes means for preventing migration of the intermediate product back to the opposite electrode, to facilitate exhaustive oxidation or reduction, respectively. A suitable means for preventing such migration is the use of a divided cell.

It should also be noted that, in some cases, the solvent component and the compound with which the cationic radical reacts may be the same compound.

It may be seen from the above that it is necessary for the organic compounds which are to be degraded to be only at least partially soluble in the aqueous liquid system used. Thus, the process of the present invention will bring about the degradation of organic waste products, including the halogenated and particularly chlorinated waste products, mensioned in claim 1, which are only sparingly soluble in the electrolyte solutions employed. This enables slurries to be successfully processed, the only practical criterion being that there should be a partial solubility, to which end the use of co-solvents has been found advantageous in some cases.

Under the conditions in which the electrochemical degradation of the present invention is carried out, the generation of more undesirable products by thermal effects is avoided, and the total containment of the substances being processed can, if desired, be maintained.

In addition, the present invention does not require the use of special organic electrolytes such as the aforementioned acetonitrile, and readily available simple solvents can be effectively used. Furthermore, the present invention has the advantage that the electrode materials which may be used are relatively cheap and suitable for the fabrication in any desired shape and size of practical and inexpensive apparatus.

The process of the present invention may be used with particular advantage for the degradation of TCDD, 2,7-dichlorodibenzo-*p*-dioxin (DCDD), and polychlorinated biphenyls (PCB), and is preferably carried out under constant current conditions.

The electrochemical degradation of the present invention may be performed using electrodes made of various materials, but those made of carbon, e.g. graphite, and steel including stainless steel are preferred. The vessel in which the aqueous liquid system is contained may be composed of an electrically conductive material having suitable corrosion resistance, or else of an electrically non-conductive material. If the latter type is used, two electrodes, that is a cathode and an anode, are contained therein and are immersed in the aqueous liquid system to form the cell. If the former type is used, however, it is possible to use the vessel itself as one of the electrodes, and consequently only one other working electrode need be present in the aqueous liquid system. For ease of measuring the cell voltage, it is preferred to include a reference electrode such as a calomel or silver/silver cation electrode as a reference. This reference electrode should, of course, also be immersed in the aqueous liquid system.

The electrolyte systems used in the present invention have a solvent component, optionally together with a supporting electrolyte, and at least one compound which reacts with the cation radicals formed in the process of the present invention to form compounds having a lower oxidation potential or reduction potential than that of the parent compound. It will be understood, however, that the solvent component may itself be a reactive component.

So far as anodic processes are concerned, it is reasonable to postulate that all organic compounds in which the highest occupied molecular orbital has weak electron binding will form cation radicals which are unstable. Larger and more complex molecules such as heterocyclic compounds, being "electron-rich", will be more readily able to behave in this way (by compensating distortion of the remaining electron orbitals). In the case of compounds such as Paraquat (a compound containing the 1.1'-dimethyl-4,4'-bipyridinium cation), these are ionic with a stable dicationic structure. Cathodic reduction of the stable dication produces a monocationic radical which is unstable. In both cases, it would appear that the essential feature is the size of the molecular group which *per se*, reduces the electron binding strength in the highest (outermost) occupied molecular orbital.

According to a feature of the invention therefore, the organic compound of compounds has, or have, an electron configuration which is such that the formation of an unstable cationic radical or radicals, occurs or occur at a potential which is not greater than the discharge potential of the solvent component, or solvent/reactive component, of the aqueous liquid system.

It is necessary that the compound to be degraded be at least partially soluble in the solvent component, which may be a single compound or a mixture of compounds. In the case of TCDD and DCDD, ethanol and methylated spirits are suitable, but other alcohols than ethanol or methanol, for example , may also be used as solvents. The requirements of any solvent used as, or as part of, the solvent component of the present invention are that the solvent should:

(a) either alone, or when mixed with a suitable co-solvent, provide adequate, but not necessarily total, solubility of the substance to be electrochemically degraded; and

(b) either alone, or with suitable additions of a supporting electrolyte, permit the achievement of adequate current densities, while retaining the electrode potential in the range necessary for effective oxidation or reduction of the substance being degraded.

In addition, the oxidation or reduction potential of the solvent component should normally be higher than that of the substance being degraded.

In some instances, it is desirable to use a co-solvent to increase the overall solubility of the compound to be decomposed, thereby to increase the rate of degradation. Examples of suitable co-solvents are methylene chloride and toluene, methylene chloride being particularly advantageously employed in the decomposition of TCDD, because of its degree of oxidative stability.

A supporting electrolyte is generally necessary in order to enable the current density to reach a level at which a useful rate of electrochemical degradation is attained. Preferred supporting electrolytes for use in the present invention are perchlorates such as sodium perchlorate and acids such as sulphuric acid. Particularly preferred supporting electrolytes are 0.1 Molar sodium perchlorate and 1.0 Molar sulphuric acid. Thus, it may be seen that the function of the supporting electrolyte, when used, is to increase the conductivity of the solvent system so that a higher current density can be maintained at the preferred electrode potentials. Perchlorates have found applications for this purpose especially for voltammetric research using organic electrolytes, e.g. anhydrous acetonitrile. In simpler aqueous electrolyte systems, such as those normally used in the process of the present invention, the wider choice remains subject to practical considerations such as not being preferentially oxidised or reduced at preferred cell operating conditions, permitting good current density and correspondingly rapid rates of electrochemical activity.

In addition, it is preferred that any supporting electrolyte used should not introduce unnecessary complications in materials used for construction, or in the ease of operability.

The reactive component, which reacts with the cationic radical, or radicals of the present invention, to form a product having an oxidation or reduction potential lower than that of the parent compound is preferably water and/or ethanol. The use of these compounds removes, of course, the need in most cases to have an additional solvent component as aforementioned. It has been found that the following liquid systems are particularly suitable for use in the present invention, especially in the degradation of TCDD and DCDD:—

(a) sulphuric acid/industrial methylated spirit/water; and

(b) ethanol/methylene chloride/sulphuric acid/water.

For the process of the present invention, the electrode potential at the anode and/or cathode should be high enough to ensure the degradation of the compound to be degraded, but should not be so high as to discharge components of the aqueous liquid system. For example, if ethanol is used as the compound with which the cations in anodic oxidation react to form a product of lower oxidation potential than that of the parent compound, it is necessary to ensure that the anode/reference potential be not lower than +2.0 V, and not higher than +2.4 V, at which level potential discharge of ethanol, becomes the sole reaction. Suitable anode/reference or cathode/reference potentials for other liquid systems may be determined by routine experimentation.

For constant current work, it has been found that, with platinum electrodes, a current density of

7

about 50 m A/cm² is suitable, while with graphite electrodes a current density of about 15 m A/cm² is suitable.

A suitable electrical supply source is a DC power supply connected to the cell through a rheostat and ammeter.

As previously mentioned, the process of the invention may be performed by means of cathodic reduction. In such a process, persistent organic substances which normally exist in a stable cationic form, for example, the herbicides known commercially as "Paraquat" and "Diquat" 1,1-ethylene-2,2'-bipyridinium salt, may be degraded. Cathodic reduction produces cationic radicals which can undergo further reduction causing the complete disappearance of the original compounds. Since, in such cases, the cationic radicals formed are normally comparatively stable, it is preferred, as aforementioned, to prevent them from migrating to the anode where reoxidation will occur. A suitable way in which this migration may be prevented is, for example, by the use of a divided cell.

As mentioned earlier, in the process of the present invention, the unstable cationic radical is formed from the persistent organic compound which is to be degraded, and the cationic radical reacts with the reactive component, to form a product having a lower oxidation or reduction potential than the parent compound, depending upon whether anodic oxidation or cathodic reduction is carried out. In the anodic oxidation of, for example, DCDD and TCDD, unstable, dicationic radicals are formed and these then react with the reactive component to form products of lower oxidation potential. In the cathodic reduction of Paraquat and Diquat, these compounds in solution give stable dications which are reduced to moderately stable monocations. When prevented from reaching the anode, as is highly desirable in practice in the case of cathodic reduction, the monocations are further reduced at the cathode. Therefore, it is not known by the applicants at this time precisely at what stage of the cathodic reduction process that reaction occurs between the cations produced and the, or each, compound present to give a product with a lower reduction potential than the parent compounds.

If the cathodic potential used in the process of the present invention is of some magnitude with reference to the standard electrode, for example when the voltage across the cell is about 2 volts or more, there exists the possibility of cathodic reduction and anodic oxidation reactions occurring simultaneously. This may be useful, for example, when processing wastes of incompletely defined composition.

The electrochemical degradation process of the present invention may be used to degrade persistent organic compounds even when such compounds are present in a large excess of other residues. In addition, the process of the present invention may be readily applied in conjunction with known means for decontamination of materials with which persistent organic compounds have been in contact. For example, the solvent or solvent mixture of the aqueous liquid system may be used in a batch or continuous solvent extraction operation and then passed to the electrochemical cell used in the present invention for electrolysis.

Reference is now made to the accompanying diagrammatic drawings, in which:

Figure 1 represents one embodiment of electrochemical apparatus for use in carrying out the process of the invention;

Figure 2 represents another embodiment of electrochemical apparatus for carrying out the process of the invention; and

Figure 3 is a graph showing voltamograms for DCDD in dry and wet acetonitrile.

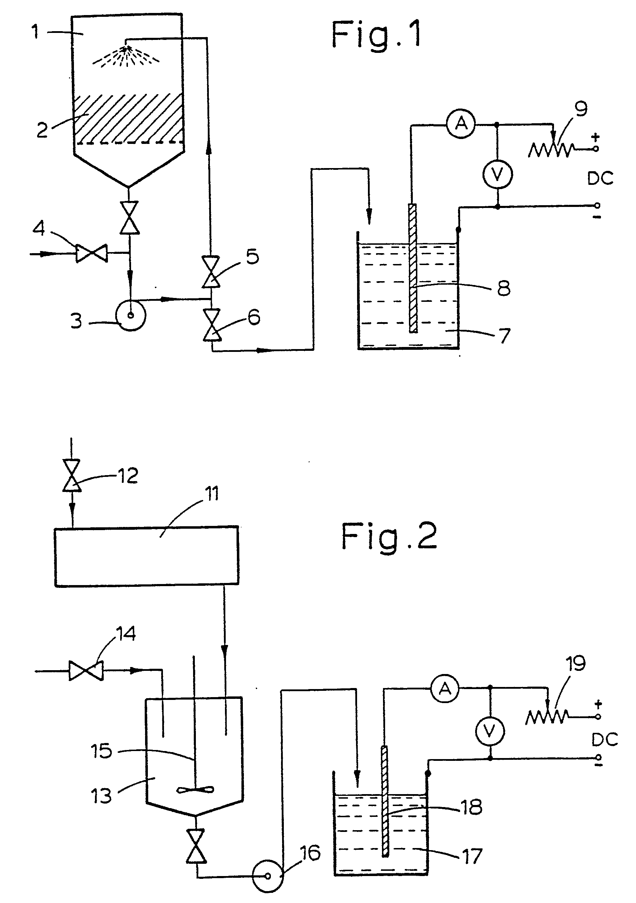

The arrangement of Fig. 1 comprises an extraction vessel 1 with a solvent spray/distribution system, extracted material being shown at 2;

an electrochemical cell 7 having a conducting container acting as a cathode;

an anode 8;

a D.C. supply and voltage regulation system 9;

a pump 3 for recirculation of solvent to the extraction vessel 1, or for transfer of extract to the electrochemical cell 7;

an inlet 4 for fresh solvent feed; and

valves 5, 6 for arranging recirculation and/or transfer to the electrochemical cell 7.

In another application of the process of the invention, the solvents may be used without the supporting electrolyte for flushing non-absorbent surfaces such as the interiors of chemical reactors and pipe-lines, and then passed to the cell, *via* an intermediate vessel where the supporting electrolyte is added, to enable the electrochemical treatment to be carried out. Figure 2 shows this embodiment.

The apparatus of Fig. 2 comprises a pipeline or reactor 11 to be rinsed with solvent;

a valve 12 for controlling the supply of fresh solvent;

a receiving vessel 13 for collecting contaminated solvent from the pipeline or reactor 11;

a valve 14 for controlling the addition of supporting electrolyte solution;

a mixer 15;

an electrochemical cell 17 having a conducting container acting as cathode;

an anode 18;

a D.C. supply and voltage regulation system 19; and

a pump 16 to transfer the contents of the vessel 13 to the electrochemical cell 17.

It will be understood that the apparatus just described may be modified, if desired, so that the solvent is passed directly to the cell vessel and the supporting electrolyte is added there.

In another application of the process of the invention the cell itself may be so constructed with respect to dimensions and location of anodes or cathodes, that contaminated articles may be placed in the cell bath and left there while the contamination is taken into solution and decomposed.

It should be noted, however, that some of the components of the liquid system are appreciably volatile even at normal temperatures, and it is desirable, in some instances, to provide for containment of the vapours produced e.g. by collection and condensation of the vapours in any manner suitable, as will be well known to those skilled in the art of pollution control.

The present invention will now be further described in detail in the following illustrative Examples. In all the Examples, the electrochemical degradation was carried out at ambient temperature. Monitoring was by analysis of the reaction mixture using gas chromatography (G.C.) with Field Ionisation Detection (F.I.D.) in the cases of DCDD and the PCBs, and with Electron Capture Detection (E.C.D.) in the case of TCDD.

In the Examples, Examples 1 to 4 and 6 all relate to the use of platinum electrodes, a current density of approximately 50 m A/cm$^2$ being used under constant current conditions. Example 5 sets out a comparison of the use of platinum and graphite electrodes, with a current density of substantially 15 m A/cm$^2$ under constant current conditions being used for the latter, and of substantially 50 m A/cm$^2$ under the same conditions for the former. In all the Examples except in the first four cases in the acetonitrile/water system reported in Example 1, the current density used was high enough to ensure that the anode reference potential was not lower than +2.0 V and not higher than the oxidation potential of the solvent which, for ethanol, is +2.4 V.

Example 1

As a basis for comparison, the electrochemical degradation of DCDD was carried out using acetonitrile and acetonitrile/water solutions having various solvent/water ratios. In each case, 50 milligrams of DCDD were slurried into 10 millilitres of solvent or solvent/water solution.

In the case of the anhydrous acetonitrile, the solubility of DCDD is 317 micrograms/ml, so that, in the test slurry, only about 6 percent of the total DCDD was in solution and the remainder was undissolved. The proportion of the DCDD in solution in the aqueous acetonitrile systems was even lower. In all cases, the supporting electrolyte used was sodium perchlorate in 0.1 molar concentration. The cell voltage was measured with reference to a silver/silver cation electrode. The results are set out in Table 1 (below). It is observed that, even at 25 and 50 percent by volume of water, the degradation proceeds although it is necessary to increase the cell voltage from 1.5 to 2.0 volts.

## TABLE 1
### Effect of Acetonitrile: Water Ratio on the Detoxification of DCDD

[50 mg DCDD slurried in 10 ml solvent]

| % (v/v) $H_2O$ | E(V) vs. Ag/Ag$^+$ | Supporting Electrolyte | Notes on Reaction |
|---|---|---|---|
| 0 | 1.5 | 0.1M NaClO$_4$ | All DCDD lost, blue cation radical formation observed |
| 5 | 1.5 | 0.1M NaClO$_4$ | All DCDD lost, blue cation radical formation still observed, although it is rapidly quenched near electrode |
| 10 | 1.5 | 0.1M NaClO$_4$ | All DCDD lost, still traces of blue cation radical formation observed |
| 15 | 1.5 | 0.1M NaClO$_4$ | All DCDD lost, no cation radical observed |
| 25 | 2.0 | 0.1M NaClO$_4$ | All DCDD lost, reaction only proceeds at higher potential |
| 50 | 2.0 | 0.1M NaClO$_4$ | Only part of DCDD lost, in corresponding time scale to above. Can all be removed after prolonged electrolysis |

E(V) = electrode potential in volts (V).

Further experiments demonstrated that larger amounts of DCDD, e.g. 0.5 g/100 ml. solvent, initially presented as a suspension in aqueous acetonitrile, can be successfully degraded the course of several hours. However, under these conditions, some fouling of the electrodes by reaction products was observed which, together with the relatively high cost and undesirably hazardous properties of acetonitrile, suggested that alternative solvents may be more advantageous.

### Example 2

Experiments showed that ethanol, with 0.1 Molar sodium perchlorate as a supporting electrolyte, behaved similarly to the above acetonitrile (Ex. 1) but with a limiting water ratio of 25 percent by volume for effective decomposition of DCDD. However, by using an 1.0 Molar solution of sulphuric acid instead of sodium perchlorate, and industrial methylated spirit (IMS) instead of pure ethanol, a very cheap electrolyte system was obtained. Suspensions of DCDD containing as much as 0.5 g in 100 mls of electrolyte solution were successfully processed, the degradation products remained soluble and no electrode fouling was observed.

IMS = alcohol denatured for power purposes, normally rectified ethanol, denatured by the addition of crude wood spirit (methanol), usually 10% (v/v), mineral naphtha or pyridine (0.4% v/v) and a purple colouring matter (unspecified) — see Hackh's Chemical Dictionary, 4th Edition (1969), Julius Grant (editor), McGraw-Hill Book Company, McGraw-Hill Inc., U.S.A.

Table 2 (below) sets out the results of the experiments carried out in alcoholic and water-containing alcoholic media.

TABLE 2
The Effect of Alternative Solvent Systems on the Detoxification of DCDD
[50 mg DCDD slurried in 10 ml solvent]

| Solvent System | E(V) vs. Ag/Ag$^+$ | Supporting Electrolyte | Notes on Reaction |
|---|---|---|---|
| EtOH | 1.5 | 0.1M NaClO$_4$ | All DCDD lost |
| EtOH | 2.0 | 0.1M NaClO$_4$ | All DCDD lost, reaction considerably faster |
| EtOH + 5% v/v H$_2$O | 2.00 | 0.1M NaClO$_4$ | All DCDD lost |
| EtOH + 10% v/v H$_2$O | 2.00 | 0.1M NaClO$_4$ | All DCDD lost |
| EtOH + 25% v/v H$_2$O | 2.00 | 0.1M NaClO$_4$ | Only part of DCDD lost |
| EtOH + 10% v/v H$_2$O | 2.0 (vs. S.C.E.) | 1.0M H$_2$SO$_2$ | All DCDD lost |
| IMS + 10% v/v H$_2$O | 2.0 (vs. S.C.E.) | 1.0M H$_2$SO$_4$ | All DCDD lost |

S.C.E. = Saturated Calomel Electrode.
IMS = Industrial methylated spirit.
E(V) = Electrode potential in volts (V).

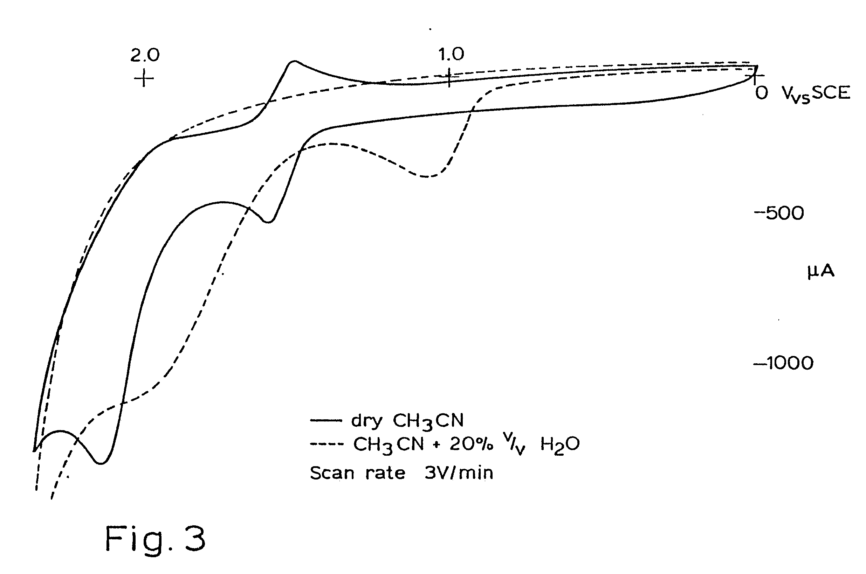

Example 3 (for comparison)
The cyclic voltammetry at a platinum electrode of an 1 millimolar solution of DCDD in anhydrous acetonitrile indicated that, at a polarising voltage (Ep) of 1.5 V, an one-electron oxidation occurs, with the formation of a cationic radical which is reversibly reducible to the parent compound. If the Ep value is increased to 2.0 V, further oxidation occurs with the formation of a dication radical and this change is irreversible. Addition of water to the acetonitrile suppresses the frist oxidation peak, which disappears entirely at about 20 percent by volume of water, being replaced by a water oxidation peak at about Ep = 1 V, and the oxidation to the DCDD dication radical at about Ep = 2 V (see Figure 3 of the accompanying drawings, which shows the voltamograms for DCDD in dry acetonitrile and in "wet" (CH$_3$CN + 20% (v/v) H$_2$O) acetonitrile at a scan rate of 3 v per min. In the graph, SCE = saturated calomel electrodes; V = volts; and $\mu$A = microamps.

In our experiments, although degradation of DCDD was obtained at Ep = 1.5 V, both in acetonitrile and in alcohol systems, the rate of decomposition was found to be accelerated considerably by increasing Ep to 2.0 V. It was further found that, by using constant current control, even higher currents could be maintained in the cell, and the decomposition process could be completed in minutes rather than hours.

Example 4
As aforementioned, the compound TCDD is closely related to DCDD but is considerably more toxic and is generally less soluble than the latter. For this reason, its destruction under the conditions described above for DCDD is very much slower. This difficulty can be overcome by the use of a co-solvent which increases the overall solubility of TCDD to a level at which a reasonable rate of degradation is obtained. Of the material tried, the most effective co-solvents were toluene and methylene chloride. Toluene was successfully used as co-solvent for the destruction of TCDD in suspension. For experimental work requiring accurate TCDD analysis, methylene chloride was preferred for its greater oxidative stability under the chosen reaction conditions. The solvent mixture used was ethanol: methylene chloride [3:1 (v/v)] with 5% 1M sulphuric acid in water. Both DCDD and TCDD were effectively destroyed under constant current conditions using platinum electrodes. The solubilities of DCDD and TCDD in various solvents and solvent mixtures are given in Table 3, as follows:

## 0 027 745

### TABLE 3
### Solubility of TCDD and DCDD in Various Solvents

| Solvent | DCDD ($\mu$g/ml) | TCDD ($\mu$g/ml) |
|---|---|---|
| $CH_3CN$ | 317 | 0.33 |
| IMS | 188 | 0.2 |
| IMS/toluene (4:1) | 515 | 11.3 |
| IMS/toluene (1:1) | 1880 | 26.5 |
| EtOH/$CH_2Cl_2$ (3:1) $H_2O$ (5% v/v) | — | 1.1 |

IMS = Industrial methylated spirit

### Example 5

Further experiments were carried out in which graphite was used for the anode, and the cell container was metallic with an appropriate corrosion resistance. It was demonstated that graphite was equally effective as an electrode material for this application, with obvious economic and practical advantages. Table 4 (below) gives the results of comparative experiments for the electrochemical decomposition of TCDD.

### TABLE 4
### Comparison of Platinum and Graphite as Anode Material
### in the Electrolysis of TCDD
### [Saturated solution in EtOH/$CH_2Cl_2$ (3:1)
### (5% v/v) $H_2O$ + 1M $H_2So_4$)]

| *F/mole TCDD | [TCDD] ng/ml | |
|---|---|---|
| | Pt | C |
| 0 | 1150 | 1150 |
| 0.5 | 1000 | 900 |
| 3 | 700 | 775 |
| 6 | 250 | 650 |
| 20 | 3.7 | 180 |
| 100 | <1 | 2.4 |

* F = Faradays

### Example 6

This Example demonstrates the electrochemical degradation of TCDD in the presence of a 15000-fold molar excess of 2,4,5-trichlorophenol, that is 66 ppm TCDD with respect to 2,4,5-trichlorophenol. It was found that TCDD was readily decomposed using an EtOH/$CH_2Cl_2$/$H_2SO_4$/$H_2O$ liquid system. The results are set out in Table 5, as follows:

12

TABLE 5
Electrolysis of TCDD in the Presence of a Large Excess
of 2,4,5-Trichlorophenol
Molar ratio TCDD:TCP = 1:15,000
[Electrolysis in EtOH/$CH_2Cl_2$ 3:1 (5% v/v
$H_2O$, 1M $H_2SO_4$) — Pt anode]

| TCDD (ng/ml) | *F/mole TCP |
|---|---|
| 1100 | — |
| 625 | 1 |
| 160 | 4 |
| 30 | 6 |
| <1 | 12 |

* F = Faradays

## Example 7

This Experiment demonstrates the applicability of the process of the present invention to the degradation of polychlorinated biphenyls (PCB). Samples of Aroclor 1221 (ex. N.E.N. Chemicals, U.K.), a low boiling point mixture of three isomers of PCB and Aroclor 1254 (ex. N.E.N. Chemicals, U.K.) a higher boiling point mixture of at least 13 isomers of PCB were used. "Aroclor" is a trade mark for polychlorinated biphenyl mixtures used as lubricants and resins, which were manufactured and placed on the market in the U.K. by Monsanto Chemicals Ltd., a U.K. Company.

Both samples were effectively destroyed in ethanol containing 1M $H_2SO_4$ and 5% v/v $H_2O$ by electrochemical treatment under constant current conditions. The progress of electrochemical degradation was monitored by removing samples at appropriate times and analysing the PCB content by Gas Chromatographic (G.C.) analysis using Field Ionisation Detection (F.I.D.). In the case of the examples, no significant change in isomer distribution occurred during the destruction of the sample. No attempt has been made to isolate products from the electrolysis.

## Claims

1. A process for the electrochemical decomposition of at least one persistent toxic organic compound selected from dioxins, chlorinated dioxins, polychlorinated biphenyls, paraquat and diquat, which is difficultly decomposable and has a low solubility in water, characterised in that said compound is subjected to anodic oxidation or cathodic reduction in an electrolyte system comprising at least one alcohol in which said organic compound is at least partially soluble and water, to form at least one unstable cationic radical which reacts with said alcohol-water system to form a product having a lower oxidation potential in the case of anodic oxidation or a lower reduction potential in the case of cathodic reduction than that of said compound.

2. A process according to claim 1, further characterised in that a cosolvent selected from methylene chloride and toluene is employed in addition to said alcohol-water system to increase the overall solubility of said compound.

3. A process according to claim 1 or claim 2, further characterised in that a supporting electrolyte is additionally employed in said alcohol-water.

4. A process according to claim 3, wherein said supporting electrolyte is selected from perchlorates and acids.

5. A process according to claim 4, in which said supporting electrolyte is sodium perchlorate.

6. A process according to claim 4, in which said supporting electrolyte is sulfuric acid.

7. A process according to claim 4, in which said supporting electrolyte is selected from 0.1 molar sodium perchlorate and 1.0 molar sulfuric acid.

8. A process according to any one of claims 1 to 7, in which a divided cell is used to prevent migration of the products of oxidation or reduction, respectively.

9. A process according to any one of claims 1 to 8, which is used to degrade a substance selected from 2,3,7,8-tetrachlorodibenzo-p-dioxin (TCDD) and 2,7-di-chlorodibenzo-p-dioxin (DCDD).

10. A process according to any one of claims 1 to 8, which is used to degrade a mixture of polychlorinated biphenyls (PCB).

# O 027 745

## Revendications

1. Procédé de décomposition électrochimique d'au moins un composé organique toxique de façon persistente, choisi parmi les dioxines, les dioxines chlorées, les biphényles polychlorés, le paraquat et le diquat, qui est dificilement décomposable et faiblement soluble dans l'eau, caractérisé en ce que ledit composé est soumis à une oxydation anodique ou à une réduction cathodique dans un système d'électrolyte comprenant au moins un alcool dans lequel ledit composé organique est au moins partiellement soluble et de l'eau pour former au moins un radical cationique instable qui réagit avec ledit système alcool-eau pour former un produit présentant un potentiel d'oxydation plus faible dans le cas de l'oxydation anodique, ou un potentiel de réduction plus faible dans le cas de la réduction cathodique, que celui dudit composé.

2. Procédé selon la revendication 1, caractérisé en ce qu'un co-solvant choisi parmi le chlorure de méthylène et le toluène est utilisé en plus dudit système alcool-eau pour augmenter la solubilité d'ensemble dudit composé.

3. Procédé selon la revendication 1 ou 2, caractérisé en ce qu'un électrolyte d'assistance est utilisé en plus dans ledit système alcool-eau.

4. Procédé selon la revendication 3, caractérisé en ce que ledit électrolyte d'assistance est choisi parmi les perchlorates et les acides.

5. Procédé selon la revendication 4, caractérisé en ce que ledit électrolyte d'assistance est du perchlorate de sodium.

6. Procédé selon la revendication 4, caractérisé en ce que ledit électrolyte d'assistance est de l'acide sulfurique.

7. Procédé selon la revendication 4, caractérisé en ce que ledit électrolyte d'assistance est choisi parmi le perchlorate de sodium à 0,1 mole et l'acide sulfurique à 1,0 mole.

8. Procédé selon l'une quelconque des revendications 1 à 7, caractérisé en ce qu'on utilise une cellule divisée pour éviter la migration des produits d'oxydation ou de réduction, respectivement.

9. Procédé selon l'une quelconque des revendications 1 à 8, que l'on utilise pour dégrader une substance choisie parmi la tétrachloro 2,3,7,8-dibenzo-p-dioxine (TCDD) et la dichloro 2,7-dibenzo-p-dioxine (DCDD).

10. Procédé selon l'une quelconque des revendications 1 à 8, utilisé pour dégrader un mélange de biphényles polychlorés (PCB).

## Patentansprüche

1. Ein Verfahren zur elektrochemischen Zersetzung mindestens einer beständigen, giftigen, unter Dioxinen, chlorierten Dioxinen, polychlorierten Diphenylen, Paraquat und Diquat ausgewählten organischen Verbindung, die schwer zersetzbar ist und geringe Löslichkeit in Wasser hat, dadurch gekennzeichnet, daß die Verbindung einer anodischen Oxidation oder kathodischen Reduktion in einem Elektrolytsystem ausgesetzt wird, welches mindestens einen Alkohol aufweist, in dem die organische Verbindung mindestens teilweise löslich ist, sowie Wasser, um mindestens ein unbeständiges, kationisches Radikal zu bilden, welches mit dem Alkohol-Wasser-System unter Erzeugung eines Produktes reagiert, das ein geringeres Oxidationspotential im Fall der anodischen Oxidation oder ein geringeres Reduktions-potential im Fall der Kathodischen Reduktion hat als die Verbindung.

2. Verfahren nach Anspruch 1, dadurch gekennzeichnet, daß zusätzlich zu dem Alkohol-Wasser-System ein unter Methylendichlorid und Toluol gewähltes Mitlösungsmittel benutzt wird, um die Gesamtlöslichkeit der Verbindung zu erhöhen.

3. Verfahren nach Anspruch 1 oder 2, dadurch gekennzeichnet, daß in dem Wasser-Alkohol zusätzlich ein Hilfselektrolyt verwendet wird.

4. Verfahren nach Anspruch 3, dadurch gekennzeichnet, daß der Hilfselektrolyt unter Perchloraten und Säuren ausgewählt wird.

5. Verfahren nach Anspruch 4, dadurch gekennzeichnet, daß der Hilfselektrolyt Natriumperchlorat ist.

6. Verfahren nach Anspruch 4, dadurch gekennzeichnet, daß der Hilfselektrolyt Schwefelsäure ist.

7. Verfahren nach Anspruch 4, dadurch gekennzeichnet, daß der Hilfselektrolyt unter 0,1 Mol Natriumperchlorat und 1,0 Mol Schwefelsäure gewählt wird.

8. Verfahren nach einem der Ansprüche 1 bis 7, dadurch gekennzeichnet, daß eine geteilte Zelle benutzt wird, um eine Wanderung der Oxidations- bzw. Reduktionsprodukte zu verhindern.

9. Verfahren nach einem der Ansprüche 1 bis 8, welches zum Abbau einer unter 2,3,7,8-Tetrachlordibenzo-p-dioxin (TCDD) und 2,7-Dichlordibenzo-p-dioxin (DCDD) gewählten Substanz benutzt wird.

10. Verfahren nach einem der Ansprüche 1 bis 8, welches zum Abbau eines Gemisches aus polychlorierten Diphenylen (PCB) benutzt wird.

14

Fig.1

Fig.2

Fig. 3